# EUROPEAN PATENT APPLICATION

(11) **EP 3 425 425 A1**
(43) Date of publication of application: **09.01.2019**
(21) Application number: 17759086.6
(22) Date of filing: 25.01.2017
(51) Int. Cl.: G01S 15/93

(54) **OFF-HOST PARKING RADAR SYSTEM AND CONTROL METHOD**

(30) Priority: 04.03.2016 CN 201610123548
(71) Applicant: Yu, Xiaopeng, Xiamen, Fujian 361100 (CN)
(72) Inventor: Yu, Xiaopeng, Xiamen, Fujian 361100 (CN)
(74) Representative: Glück Kritzenberger Patentanwälte PartGmbB
(86) International application number: PCT/CN2017/072630
(87) International publication number: WO 2017/148235

(57) **Abstract**

Disclosed are a hostless parking radar system and a control method. The parking radar system comprises a plurality of sensors (1a-1d), wherein each sensor unit can be independently used as a master sensor to coordinate other sensors as slave sensors, and controls the working time sequence of each slave sensor; and each sensor unit is independent in connection with and in communication with a vehicle bus module (3) and/or a buzzer (4). The plurality of sensors is provided with the same structure, and each sensor can be used as the master sensor, so that the functional completeness and the reliability of the parking radar system are ensured.

## Description

### Field of the Invention

The present invention relates to the field of vehicle parking radar systems, and particularly, to a hostless parking radar system and a control method.

### Background of the Invention

Over more than a decade of popularization and application, a parking radar system, commonly known as a reversing radar system, has been growing increasingly mature. The early parking radar system is usually configured with two to four sensors, a host (controller) and an independent buzzer, or the buzzer is designed to be integrated in the host. The system detects obstacles via the sensors, and when the detection distance reaches the alarm condition, the system drives the buzzer to carry out acoustic alarm prompt through the host. Besides the acoustic alarm prompt, the parking radar system at the present stage is capable of carrying out parking radar image display alarm prompt, through the communication of its host with a vehicle bus module, e.g., the connection and communication with an instrument or a multimedia display screen, and the instrument and the multimedia display screen , therefore, making the parking radar system more functional.

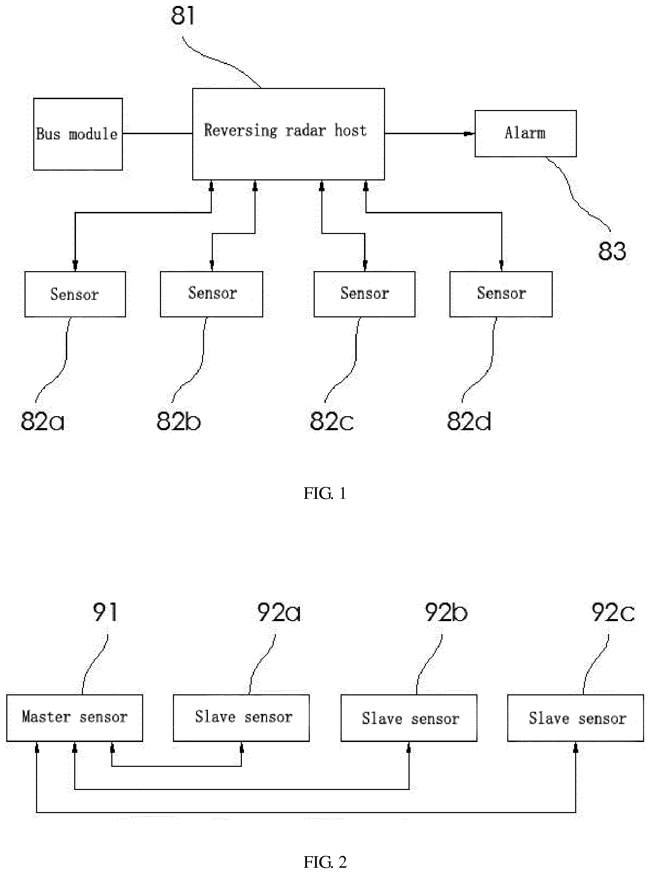

Fig. 1 shows a traditional parking radar system, which is also referred to as a reversing radar system. It usually includes a host 81, a plurality of sensors (also referred to as distance sensors) 82a, 82b, 82c and 82d, and at least one alarm 83, wherein the plurality of sensors are respectively connected with the host 81, and work harmonically under the control of the host 81, each sensor 82 detects an obstacle to obtain data and transmits the data to the host 81, the host 81 analyzes the data and judges the distance of the obstacle, and when the actual distance is short and satisfies an alarm prompt condition, the host 81 drives the buzzer alarm 83 to carry out an acoustic alarm prompt. In some parking radar systems, the host communicates with a vehicle bus module to transmit data. Generally, a number of sensors are arranged on the front and/or the rear bumpers of the automobile, with two or four for each.; and the host 81 is arranged in the body of the automobile.

For the traditional host-containing parking radar system, particularly when the system is configured with a few sensors, e.g., four, three or two sensors, the cost proportion of the host in the whole parking radar system is relatively high. Meanwhile, in the traditional host-containing parking radar system, the host is connected with the sensors via many wires, so the consumption of conducting wires is high.

In recent years, in consideration of cost reduction of the parking radar system, the hostless parking radar system has been developed and applied. In the aspect of product composition, the hostless parking radar system mainly eliminates a host (controller) required by the traditional parking radar system. In the aspect of factory application, some connecting wires are saved, and the installation time cost of the host and the like are also saved, so that the application cost of the complete set of system is down somehow.

However, none of the existing hostless parking radar systems is perfect.

A hostless reversing radar system with the publication number CN1892249A, as shown in Figs. 2 and 3, includes a master sensor 91 and one or more slave sensors such as a slave sensor 92a, a slave sensor 92b and a slave sensor 92c, wherein the master sensor 91 has an obstacle detection function and harmonically controls the working time sequence of the slave sensors and communicates with the salve sensors, eliminating the arrangement of the host 81. Meanwhile, as the master sensor 91 and the slave sensors are all arranged on a bumper, the lengths of connecting wires of the whole reversing radar system can be shortened, and the system can be tested on the bumper, therefore, the test efficiency of the whole vehicle is improved.

In the hostless reversing radar system, the sensors are divided into the master sensor 91 and the slave sensors, which are not universal to each other, so a manufacturer needs to produce them separately, raising the problems of production line waste and low production efficiency. In installation, a user needs to select and identify the both, because the master sensor 91 and the slave sensors 92 are roughly the same in shape and appearance. All these pose a hidden hazard that the two kinds of sensors are confused to cause system failures. This is the major defect of the hostless reversing radar system, and the subsequent hostless parking radar systems see some improvement in this defect.

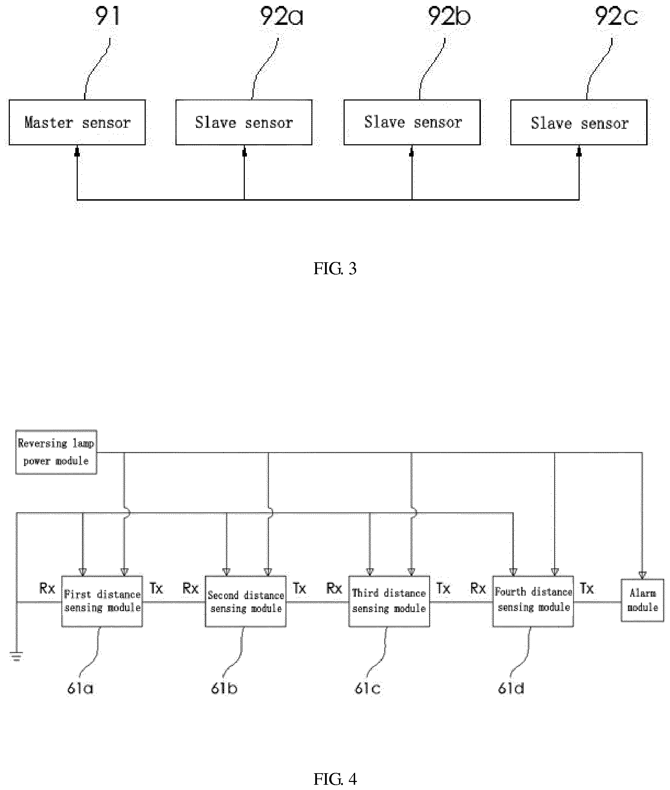

The hostless reversing radar system shown in Figs. 2 and 3 further has the following defects:
1. after the master sensor 91 fails and when the hostless radar system is power-on, the system cannot make complete and accurate self-check and prompt on the slave sensors 92a, 92b and 92c;
2. after the master sensor 91 fails, the slave sensors 92a, 92b and 92c cannot communicate with the master sensor or the outside, so they cannot exert their normal functions even if they function well; and
3. only the master sensor 91 is connected with the buzzer and can drive the buzzer to carry out alarm prompt, whereas the slave sensors do not have this function, so when the master sensor 91 fails, the drive control of the system on the buzzer fails.

In a hostless reversing radar alarm system with the publication number CN201600454U shown in Fig. 4, the input end RX of a first sensor 61a is connected with an external network, and this sensor is determined as the first sensor 61a at the end by detecting high and low level signals input thereby; the output end TX of the first sensor 61a is connected with the input end RX of a second sensor 61b, the output end TX of the second sensor 61b is connected with the input end RX of a third sensor 61c, the output end TX of the third sensor 61c is connected with the input end RX of a fourth sensor 61d, and the output end TX of the fourth sensor 61d at the tail is connected with an alarm module (a buzzer or a vehicle bus module). The signal transmission of the sensors 61a, 61b, 61c and 61d is in a series connection manner, the sensors work in sequence and transmit data, and the data from each sensor is transmitted to the fourth sensor 61d at the tail for collective processing.

If an alarm condition is satisfied, the fourth sensor 61d drives the alarm module to carry out an alarm prompt. Generally, the fourth sensor 61d, which coordinates other sensors to work sequentially, carries out internal communication and realizes alarm output or communicates with an outside vehicle bus module, is referred to as a master sensor of the system. Compared with the hostless reversing radar system with the publication number CN1892249A, the maximum advantage of this hostless radar system is to realize the consistency of the sensors, making the two kinds of sensors in the system unnecessary and improving the convenience of the system in the aspects of installation, application, maintenance and the like.

Even so, this hostless reversing radar alarm system has the following defects:
1. when the fourth sensor 61d fails and the hostless radar system is power-on, the system cannot make complete and accurate self-check and prompt on the third sensor 61c, the second sensor 61b and the first sensor 61a;
2. when the fourth sensor 61d fails, the third sensor 61c, the second sensor 61b and the first sensor 61a cannot communicate with the fourth sensor 61d or the outside, so when the fourth sensor 61d fails, the third sensor 61c, the second sensor 61b and the first sensor 61acannot exert their normal functions even if they function well; and
3. in this hostless reversing radar system, only the fourth sensor 61d is connected with the buzzer and can drive the buzzer to alarm, but the other sensors cannot do the same, so when the fourth sensor 61d fails, the drive control of the system on the buzzer fails.

In a hostless parking radar system having a series structure, with the publication number CN102129076A shown in Fig. 5, the second port of an analog switch of a first sensor 71a is connected with an external network, and this sensor is determined as the first sensor 71a at the end by detecting input signals thereof; the first port of the analog switch of the first sensor 71a is connected with the second port of an analog switch of a second sensor 71b, the first port of the analog switch of the second sensor 71b is connected with the second port of an analog switch of a third sensor 71c, the first port of the analog switch of the third sensor 71c is connected with the second port of an analog switch of a fourth sensor 71d, and the first port of the analog switch of the fourth sensor 71d at the tail is suspended. The power-on sensors 71a, 71b, 71c and 71d are connected with each other via switching on the internal switches to form an internal network, so the sensors 71a, 71b, 71c and 71d can work simultaneously and realize two-way communication via the internal network; and the first sensor 7a is a master sensor of the system. Compared with the hostless reversing radar system with the publication number CN1892249A, this hostless radar system also realizes the consistency of the sensors, and the system does not need two kinds of sensors. Meanwhile, compared with the hostless reversing radar system with the publication number CN201600454U, this solution has the following advantages: 1, the response speed of the system is improved, and 2, the system can realize trigonometric positioning (by calculating a trigonometric function), which is a relatively advanced auxiliary detection method.

However, this hostless parking radar system has the following defects:
1. after the first sensor 71a fails and when the hostless radar system is power-on, the system cannot position each sensor and allocate an ID number to each sensor, and cannot make complete and accurate self-check and prompt on the second sensor 71b, the third sensor 71c and the fourth sensor 71d;
2. after the first sensor 71a fails, the second sensor 71b, the third sensor 71c and the fourth sensor 71d cannot exert their normal functions due to self-check failure and physical connection interrupt even if they function well;
3. this hostless parking radar system does not support direct connection with the buzzer to drive it to carry out alarm prompt, but utilizes the vehicle bus module or other unit module to drive the buzzer to carry out alarm prompt instead, so the functionality of the system is insufficient. To some extent, the use of a vehicle bus module functions as a host makes the system not a hostless parking radar system in true sense; and
4. after the first sensor 71a fails, even if the second sensor 71b, the third sensor 71c and the fourth sensor 71d function well, the communication between the system and the vehicle bus module fails because they are not in connection with or in communication with the vehicle bus module.

Of the hostless reversing radar system with the publication number CN1892249A, the hostless reversing radar alarm system with the publication number CN201600454U and the hostless parking radar system having a series structure with the publication number CN102129076A above, the application cost of the hostless parking radar system is reduced compared with the traditional host-containing parking radar system; and meanwhile, with the progress in the hostless parking radar technology, the hostless parking radar system is becoming increasingly powerful in functionality and is becoming more alike to the traditional host-containing parking radar system in function and performance; but even so, the existing hostless parking radar system has one or more defects illustrated below:
1. When the system is powered on and a sensor (mainly a master sensor) fails, the system cannot realize complete and accurate self-check on all sensors, i.e., under the situation that a sensor fails, the power-on system cannot simultaneously judge that the state of each other sensor is failure or well.
2. After the system is powered on, the failure of a sensor leads to the failure of the detection functions of other well-functioning sensors of the system, so that the overall detection function of the system fails.
3. The system cannot be in direct connection with the buzzer to drive it to carry out acoustic alarm prompt, or only one sensor, instead of all sensors, is connected with the buzzer to drive it to carry out acoustic alarm prompt. The hostless parking radar system, which cannot be in direct connection with the buzzer to drive it to carry out acoustic alarm prompt, has to carry out acoustic alarm prompt by means of the vehicle bus module or other unit module, so the system is poor in functionality, and strictly speaking, it cannot be a hostless parking radar system. Or, in the hostless parking radar system having only one sensor, instead of all sensors, in connection with the buzzer to drive it to carry out acoustic alarm prompt, when the sensor in connection with the buzzer to drive it fails, the acoustic alarm function of the system fails, so the functionality of the system is relatively poor.
4. The system cannot communicate with the vehicle bus module, or only one sensor, instead of all sensors, communicates with the vehicle bus module. The hostless parking radar system that cannot communicate with the vehicle bus module cannot display a parking radar image via an automobile instrument or a vehicle multimedia display screen, so the functionality of the system is poor. Or, in the hostless parking radar system in which only one sensor, instead of all sensors, communicates with the vehicle bus module, when the sensor in connection with the vehicle bus module fails, the data transmission function of the parking radar system fails, so part of or all of the functions of the system fail, and the functionality of the system is relatively poor.

### Summary of the Invention

In view of the problems in the prior art, the object of the present invention is to provide a hostless parking radar system having an improved structure and complete functions and a control method.

In order to fulfill the above object, the hostless parking radar system of the present invention includes a plurality of sensors, wherein:
each sensor unit can be independently used as a master sensor to coordinate other sensors as slave sensors, and controls the working time sequence of each slave sensor; and
each sensor unit is independent in connection with and in communication with a vehicle bus module and/or a buzzer.

Further, the internal structure of each sensor is identical.

Further, only one sensor serves as a master sensor at the same working time.

Further, each sensor includes a singlechip 11, an ultrasonic sensor 13, a transmitting module 14, a receiving module 15, a power module 16, a detection and control module I 17 and a detection and control module II 18; the singlechip 11 is a control core and generates ultrasonic pulses, and the ultrasonic pulses are amplified by the transmitting module 14 to drive the ultrasonic sensor 13 to transmit ultrasonic; the ultrasonic sensor 13 receives return signals, and the return signals are amplified and filtered by the receiving module 15 and then transmitted to the singlechip 11 for analyzing.

Further, both the detection and control module I 17 and the detection and control module II 18 are connected with the singlechip 11, and the detection and control module I 17 or the detection and control module II 18 is in connection with and in communication with the buzzer 4.

Further, each sensor also includes a communication module 12, which is in connection with and in communication with the vehicle bus module 3.

Further, the sensor is provided with a PIN1, a PIN2, a PIN3, a PIN4 and a PIN5 for external connection; and in the sensor, the PIN1 is connected with the detection and control module I 17, the PIN2 is connected with the detection and control module II 18, the PIN3 is connected with the communication module 12, the PIN4 is a ground end, and the PIN5 is connected with the power module 16.

Further, the PIN1, the PIN2 and the PIN3 can function as input pins and output pins between corresponding connection units.

Further, the PIN1 and the PIN2 are connected to a high-level power end, a low-level ground end or an overhead end, and the connection combination forms of the PIN1 and the PIN2 in each sensor are different, thus forming distinguishing features of input voltage signals between the PIN1 and the PIN2.

Further, when the PIN1 and the PIN2 are used as input pins, the PIN1 and the PIN2 respectively receive external input high-level, low-level and overhead signals, and each sensor detects different input voltage signal features via the PIN1 and the PIN2 therein to realize the positioning and ID number allocating thereof.

Further, the sensor is externally connected with a system communication line via the PIN3 to realize connection and communication with the vehicle bus module 3.

Further, a high-level line I 5 and a high-level line II 6 are arranged in the system and connected with an external power supply, the PIN5 of each sensor is connected with the high-level line I 5, and the PIN1 and/or the PIN2 are connected with the high-level line II 6.

Further, the high-level line II 6 functions as an input line and an output line.

Further, the buzzer 4 is arranged on the high-level line II 6.

Further, the buzzer 4 is arranged independently or integrated to other component.

A hostless parking radar control method for implementing the above system, technically:
1) when the system is power-on, the positioning of each sensor and allocation of an ID number to each sensor are identified by detecting the distinguishing features of input voltage signals of each sensors;
2) the system sets a first normal sensor as a master sensor thereof, and the remaining sensors as slave sensors;
3) the master sensor instructs the slave sensors to carry out self-check, receives the self-check results, comprehensively judges the states of all the sensors, and then carries out corresponding self-check alarm prompt on the buzzer, or sends the self-check results to a vehicle bus module to carry out prompt; and
4) after the power-on self-check of the system is completed, the master sensor coordinates the sensors to work sequentially and carry out internal communication, thus realizing alarm output and external communication with the vehicle bus module.

Further, in steps 2) and 3), if the first sensor fails, and when the system is power-on, the second sensor that does not receive the self-check inquiry information of the first sensor within a set time serves as the master sensor.

Further, in step 3), the self-check method of each sensor is as follows:
a) when all the sensors are normal, the buzzer 4 buzzes to give an acoustic prompt;
b) when one or more sensors fail, the buzzer 4 buzzes to give different acoustic prompts; and
c) when all the sensors fail, the buzzer does not buzz.

The hostless parking radar system of the present invention is provided with the plurality of sensors with the same structure, and each sensor can be used as the master sensor, so that functionality of the hostless parking radar system of the present invention becomes better, and more importantly, the functional completeness and the reliability of the parking radar system are ensured.

### Brief Description of the Drawings

Fig. 1 is a structure principle block diagram of a traditional host-containing parking radar system;
Fig. 2 is a structure principle block diagram of a hostless parking radar system;
Fig. 3 is a structure principle block diagram of a hostless parking radar system;
Fig. 4 is a structure principle block diagram of a hostless parking radar system;
Fig. 5 is a structure principle block diagram of a hostless parking radar system;
Fig. 6 is an outside view of a sensor of the present invention;
Fig. 7 is an internal principle block diagram of the sensor of the present invention;
Fig. 8 is a structure principle block diagram I of a hostless parking radar system of the present invention;
Fig. 9 is a structure principle block diagram II of the hostless parking radar system of the present invention;
Fig. 10 is a structure principle block diagram III of the hostless parking radar system of the present invention;
Fig. 11 is an internal electrical principle diagram of sensors of the hostless parking radar of the present invention.

### Detailed Description of the Invention

The present invention will be illustrated more comprehensively below with reference to the accompanying drawings, which show exemplary embodiments of the present invention. However, the present invention can be embodied in multiple different forms, and should not be interpreted as being limited to the exemplary embodiments described herein. These embodiments are provided for making the present invention comprehensive and integral and completely delivering the scope of the present invention to those of ordinary skill in the art.

In order to facilitate illustration, spatially relative terms such as "upper", "lower", "left" and "right" can be used herein for describing the relation between one element or feature and the other element or feature shown in a figure. It should be understood that the spatial terms are intended to include different directions of a device in use or in operation besides the directions shown in the figures. For example, if the device in the figure is inverted, an element described as "below" other element or feature will be positioned "on" the other element or feature. Thus, the exemplary term "lower" may include upper and lower directions. The device can be positioned in other manner (rotated by 90 degrees or positioned in other direction), and the space herein can be correspondingly explained.

A hostless parking radar system of the present invention includes a plurality of sensors, wherein:
each sensor unit can be independently used as a master sensor to coordinate other sensors as slave sensors, and controls the working time sequence of each slave sensor; and
each sensor unit is independent in connection with and in communication with a vehicle bus module and/or a buzzer.

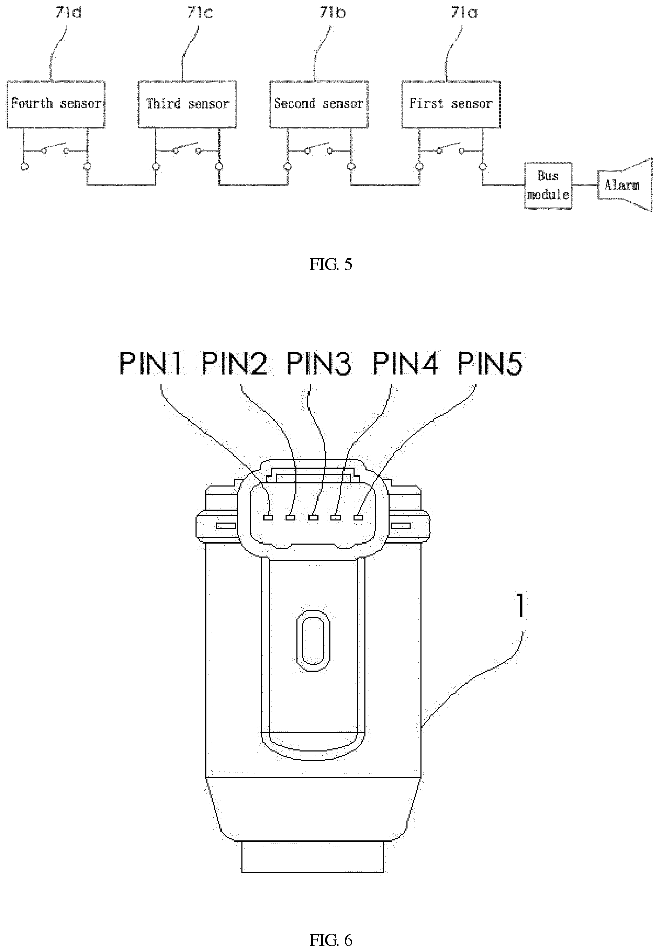

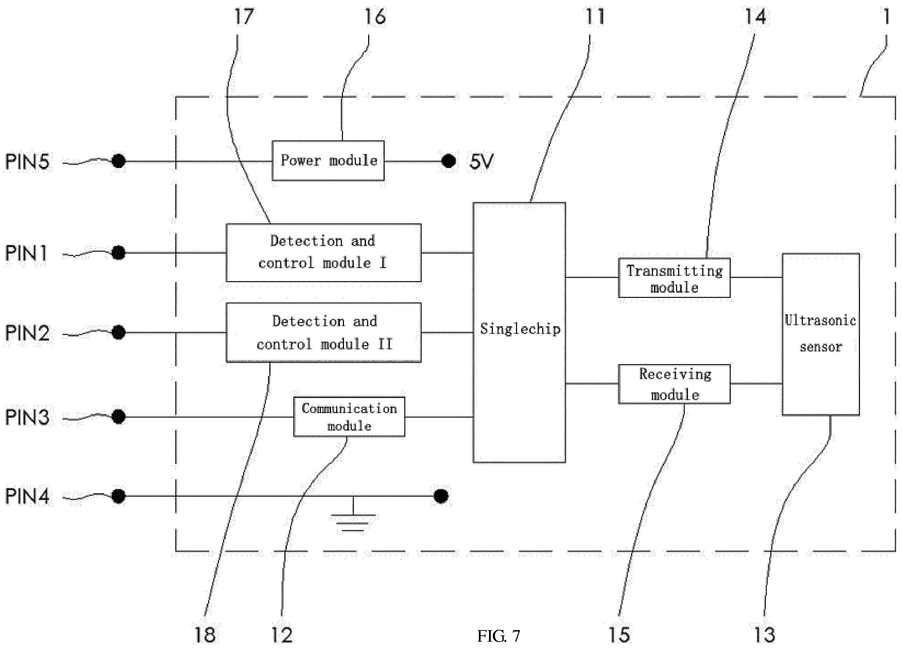

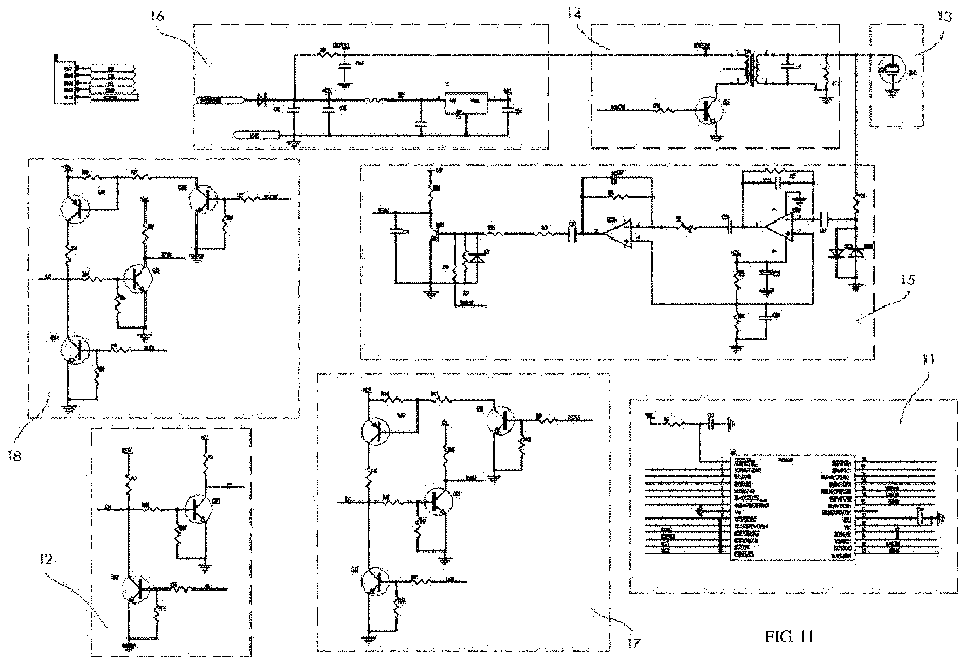

The appearance of a sensor in the present invention is shown in Fig. 6, the internal principle block diagram is shown in Fig. 7, and the internal electrical principle diagram is shown in Fig. 11. The internal structure of each sensor is identical to ensure that each sensor has the same function, so that the universality of the sensors is improved.

Each sensor includes a singlechip 11, a communication module 12, an ultrasonic sensor 13, an ultrasonic transmitting module 14, an ultrasonic receiving module 15, a power module 16, a detection and control module I 17 and a detection and control module II 18.

The singlechip 11 is a control core and generates ultrasonic pulses, and the ultrasonic pulses are amplified by the transmitting module 14 to drive the ultrasonic sensor 13 to transmit ultrasonic. The ultrasonic sensor 13 receives return signals, the return signals are amplified and filtered by the receiving module 15 and then transmitted to the singlechip 11, and the singlechip 11 analyzes and processes the return signals to obtain obstacle distance information. The detection and control module I 17 or the detection and control module II 18 is in connection with and communication with the buzzer 4. The communication module 12 is in connection with and in communication with the vehicle bus module 3.

The sensor includes five pins: a PIN1, a PIN2, a PIN3, a PIN4 and a PIN5, which are respectively connected with power, ground, communication, detection and control I and detection and control II. That is, inside the sensor, the PIN1 is connected with the detection and control module I 17, the PIN2 is connected with the detection and control module II 18, the PIN3 is connected with the communication module 12, the PIN4 is a ground end, and the PIN5 is connected with the power module 16. The PIN1, the PIN2 and the PIN3 can function as input pins and output pins between corresponding connection units.

The PIN 5 is a power pin, i.e., a 12V or 24V anode input pin, and is connected with the power module 16; and the PIN 4 is a 0V cathode input pin, i.e., is grounded. In the sensor, the PIN5 and the PIN4 are connected with other modules and provides power support via the power module 16.

The PIN3 is a communication pin of the sensor, internally connected with the communication module 12, and externally connected with a system communication line to connect the vehicle bus module 3.

Regarding the PIN1 and the PIN2, inside the sensor, the PIN1 is connected with the detection and control module I 17, and the PIN2 is connected with the detection and control module II 18. Outside the sensor, the PIN1 and the PIN2 are connected to a high-level power end, a low-level ground end or an overhead end, and the connection combination forms of the PIN1 and the PIN2 in each sensor are different, thus forming distinguishing features of input voltage signals between the PIN1 and the PIN2. When functioning as input pins, the PIN1 and the PIN2 respectively receive external input high-level, low-level and overhead signals, and a combination of different input voltage signals is detected via the PIN1 and the PIN2 to realize positioning and ID number allocation of the sensor. When functioning as output pins, the PIN1 and the PIN2 can be in direct connection with the buzzer 4 to drive it to carry out acoustic alarm prompt.

A high-level line I 5 and a high-level line II 6 are arranged in the system and connected with an external power supply, wherein the PIN5 of each sensor is connected with the high-level line I 5, and the PIN1 and/or the PIN2 are connected with the high-level line II 6. The high-level line II 6 functions as an input line and an output line, and the buzzer 4 is arranged on the high-level line II 6.

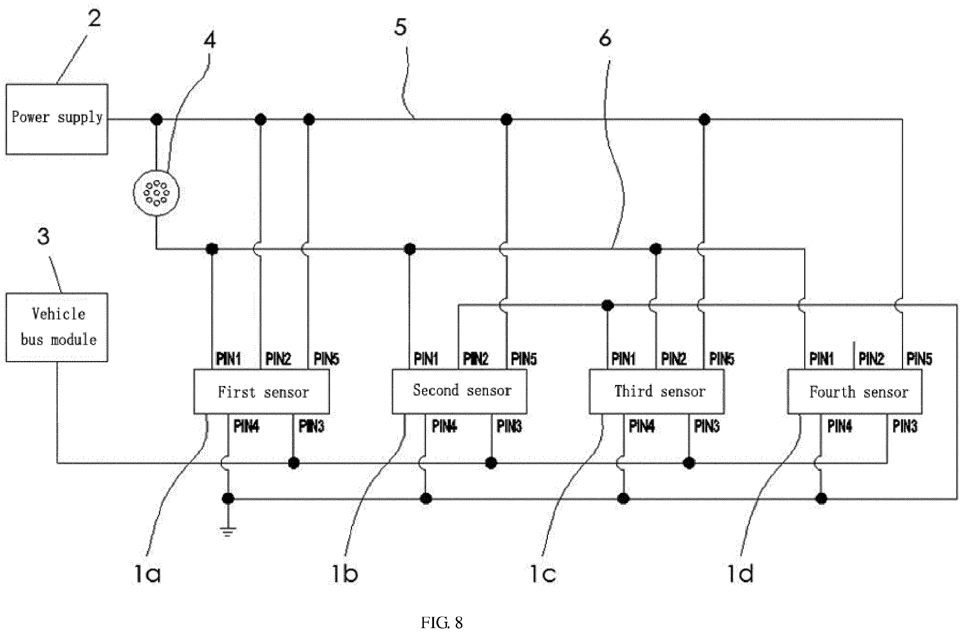

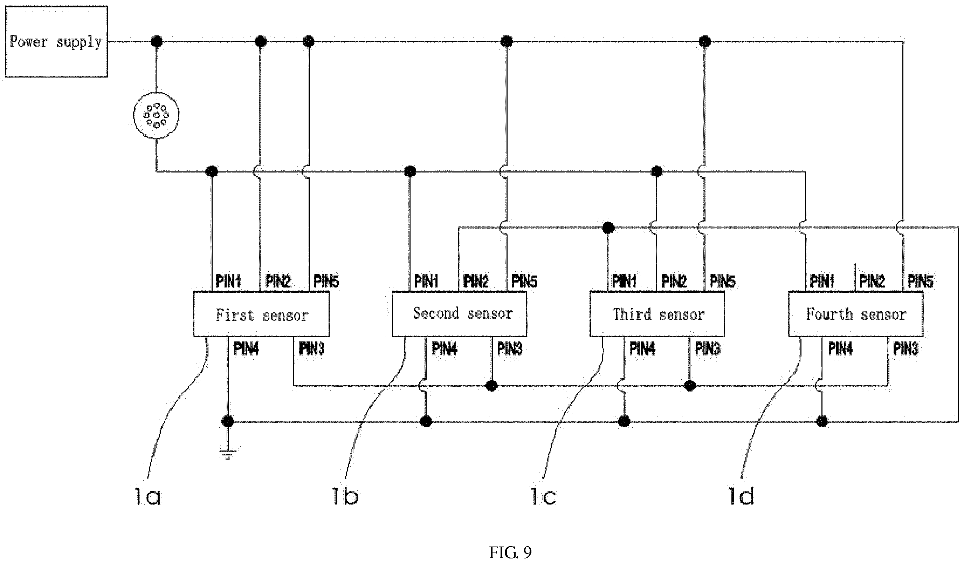

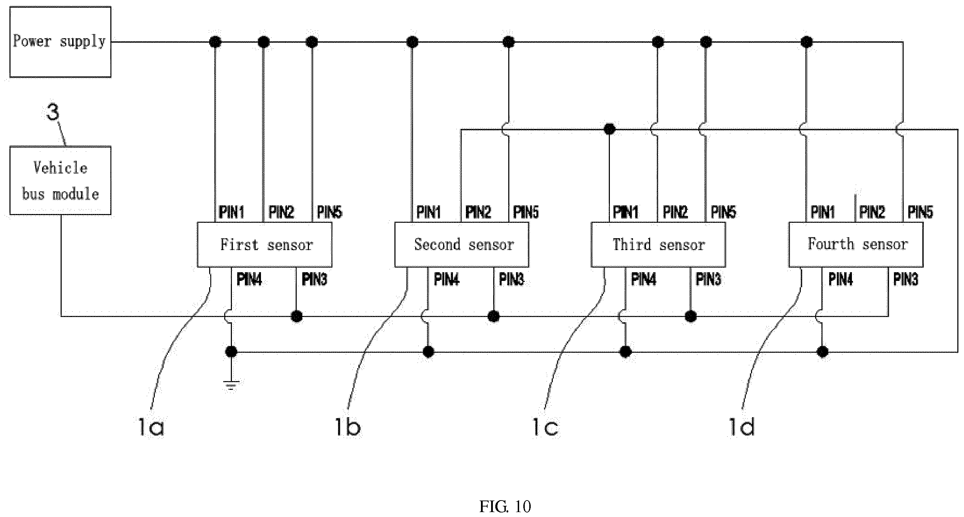

Figs. 8, 9 and 10 are structure principle block diagrams of the hostless radar system of the present invention (network connection structure diagrams of the system) and respectively show embodiments 1, 2 and 3, and embodiments 2 and 3 of the present invention are simplified embodiments of embodiment 1. The vehicle bus module 3 is simplified and eliminated in Fig. 9, and the buzzer 4 is simplified and eliminated in Fig. 10.

The PIN1 and the PIN2 respectively input "high and high", the singlechip recognizes and judges this sensor as a first sensor 1a of the system, and a corresponding ID number is allocated to the sensor; the PIN1 and the PIN2 respectively input "high and low", this sensor is set as a second sensor 1b of the system, and a corresponding ID number is allocated to it; the PIN1 and the PIN2 respectively input "low and high", this sensor is set as a third sensor 1c of the system, and a corresponding ID number is allocated to it; and the PIN1 and the PIN2 respectively input "high and overhead", this sensor is set as a fourth sensor 1d of the system, and a corresponding ID number is allocated to it.

The PIN1 and the PIN2 also simultaneously function as output pins. When the PIN1 and the PIN2 are connected with the power supply 2 via the buzzer 4 to function as high-level input pins, they serve as not only level state detection pins, but also control output pins of the buzzer 4. The connection structure of the PIN1 and the PIN2 of each sensor is shown in Fig. 8, which is a connection application example of the present invention, and other connection application examples with similar or equivalent effects are not listed one by one herein but they all fall into the scope of the present invention.

The PIN3 is a communication pin of the sensor, and is connected with the communication module 12. The PIN3 of each sensor is connected via a single lead, and all the sensors are connected with each other via the single leads and carry out two-way communication to realize internal communication of the system; and the single leads can also be simultaneously connected with the vehicle bus module 3 to realize communication between the system and the vehicle bus module 3, i.e., realize communication between the system and the outside. Usually, the communication is LIN bus communication.

A hostless parking radar control method, technically:
1) when the system is power-on, the positioning of each sensor and allocation of an ID number to each sensor are identified by detecting the distinguishing features of input voltage signals of each sensor;
2) the system sets a first normal sensor as a master sensor thereof, and the remaining sensors as slave sensors;
3) the master sensor instructs the slave sensors to carry out self-check, receives the self-check results, comprehensively judges the states of all the sensors, and then carries out corresponding self-check alarm prompt on the buzzer, or sends the self-check results to a vehicle bus module to carry out prompt; and
4) after the power-on self-check of the system is completed, the master sensor coordinates the sensors to work sequentially and carry out internal communication, thus realizing alarm output and/or external communication with the vehicle bus module.

In steps 2) and 3), if the first sensor fails, when the system is power-on, the second sensor that does not receive the self-check inquiry information of the first sensor within a set time serves as the master sensor.

In step 3), the self-check method of each sensor is as follow:
a) when all the sensors are normal, the buzzer 4 buzzes to give an acoustic prompt;
b) when one or more sensors fail, the buzzer 4 buzzes to give different acoustic prompts; and
c) when all the sensors fail, the buzzer does not buzz.

In combination with Fig. 8, the hostless parking radar control method of the present invention can realize power-on self-check of the system, normal obstacle detection, alarm driving and controlling of the buzzer 4, as well as communication and the like, illustrated technically as follows:
When the system is powered on, each sensor is detected via different combined level inputs, and the system realizes the positioning and ID number allocation of each sensor; generally, the system sets the first well-functioning sensor 1a as a master sensor of the system, and all the sensors are in connection with and in communication with each other via a LIN bus.

when the system is being powered-on, the master sensor inquires self-check results of the second sensor 1b, the third sensor 1c and the fourth sensor 1d, and the second sensor 1b, the third sensor 1c and the fourth sensor 1d return the self-check results to the master sensor. If the second sensor 1b, the third sensor 1c and the fourth sensor 1d are abnormal, such as, failed, the master sensor cannot receive their self-check answer information, so they are judged as failed sensors. After the states of all the sensors are judged comprehensively, the master sensor carries out corresponding self-check alarm prompt on the buzzer 4, or the master sensor sends the self-check results to the vehicle bus module 3 in the form of data, and the vehicle bus module 3 or other unit module carries out corresponding self-check alarm prompt, which may be acoustic alarm prompt or image alarm prompt.

If the first sensor 1a fails, when the system is being powered-on, the second sensor 1b that cannot receive the self-check inquiry information of the first sensor 1a within a set time serves as the master sensor to inquire other sensors, the other sensors answer the second sensor 1b, and buzzing alarm output and/or external communication with the vehicle bus module 3 are carried out via the second sensor 1b.

And this process repeats itself several times. The power-on self-check of the system may be specifically implemented as follows: 1, when all the sensors are normal, the buzzer 4 buzzes for 1.0 second; 2, when the first sensor 1a fails, the buzzer 4 buzzes one time lasting 0.4 seconds; when the second sensor 1b fails, the buzzer 4 buzzes two times with each lasting 0.4 seconds; when the third sensor 1c fails, the buzzer 4 buzzes three times with each lasting 0.4 seconds; when the fourth sensor 1d fails, the buzzer 4 buzzes four times, 0.4 seconds for each time; and when a plurality of sensors fail, the buzzer 4 buzzes with other set acoustic prompt; and 3, when all the sensors fail, the buzzer 4 does not buzz.

From the above description, the hostless parking radar system of the present invention can notify the driver or the after-sales maintenance personnel whether each sensor in the current system is in a good state or not at one single time, and if some sensors fail, the system can be powered on to accurately and completely judge all the failed sensors at a single time and makes a corresponding alarm prompt. The failure of one sensor does not cause associated impact on other sensors physically.

After the power-on self-check of the system is completed, the master sensor coordinates the sensors to work sequentially and carry out internal communication, thus realizing alarm output and external communication with the vehicle bus module 3. If the first sensor 1a is a qualified one, it coordinates other sensors to work sequentially as a master sensor, and if the first sensor 1a fails, the second sensor 1b coordinates other well-functioning sensors to work sequentially as a master sensor. Therefore, when any sensor fails and after the hostless parking radar system of the present invention is powered on, other well-functioning sensors in the system do not fail physically, but can continue to work normally and exert their functions according to the requirement and setting of the system.

The hostless parking radar system of the present invention is shown in Fig. 8, in which each sensor of the system is connected with a buzzer alarm via the PIN1 or the PIN2, so each sensor of the system can be connected with the buzzer 4 to drive it to carry out acoustic alarm prompt. When the original master probe that drives the buzzer 4 to carry out acoustic alarm prompt in the system fails, the power-on system will automatically set another well-functioning probe as the master probe to carry out acoustic alarm prompt, wherein the self-check result output alarm and the normal object detection range information prompt alarm are same. This characteristic reflects better functionality of the hostless parking radar system of the present invention, and more importantly, ensures functional completeness and reliability of the parking radar system.

In the hostless parking radar system of the present invention shown in Fig. 8, each sensor of the system is connected with the vehicle bus module 3 via the LIN bus, and when the master probe in charge of data transmission fails, the system will automatically set another well-functioning probe as the master probe to communicate with the vehicle bus module 3. This characteristic reflects better functionality of the hostless parking radar system of the present invention, and more importantly, ensures functional completeness and reliability of the parking radar system.

In other hostless parking radar systems, only one sensor (master sensor) is connected with the vehicle bus module; or only one sensor is connected with the buzzer alarm; or the sensors and the system do not support direct connection with the buzzer to drive it to alarm; or a series structure physically exists in self-check (positioning and ID allocation, failure detection) of the sensors, data transmission, power connection and the like; and these reasons cause functional defects of the system.

In the sensor solution of the present invention and the network connection solution of the system, each sensor is independently embodied in an equal or equivalent manner in the system on level input, alarm output, data transmission, power supply connection and the like. Direction judgment and ID number allocation of each sensor in the system are realized by detecting combined levels; each sensor can be directly connected with the buzzer 4 to drive it to alarm; all the sensors are connected with each other via single leads and can be simultaneously connected with the vehicle bus module 3 to realize internal communication of the system and communication with the outside; and all the sensors are connected with the external power supply 2 in a parallel and equivalent manner.

The above innovations of the hostless parking radar system of the present invention overcome various defects of the other existing hostless parking radar systems, and have the following competitive advantages in summary:
1. When the system is being powered on, and when any sensor fails, the system can simultaneously carry out complete and accurate self-check on all sensors, i.e., under the situation that any sensor fails, the power-on system can simultaneously detect and judge the state of each other sensor (failed or well). This functional characteristic facilitates driver's judgment on the state of the radar system, and also greatly facilitates failure maintenance of after-sales service personnel to the system.
2. After the system is powered on, and when any sensor fails, other normal sensors in the system do not fail physically. Instead, they can continue to work normally and exert their functions according to the requirement and setting of the system. This characteristic enables better functionality of the hostless parking radar system.
3. Each sensor in the system can be connected with the buzzer 4 to drive it to carry out acoustic alarm prompt.

The system does not need to carry out acoustic alarm prompt by means of the vehicle bus module 3 or other unit module, nor does it provide connection only to one sensor to drive the buzzer 4 to carry out acoustic alarm prompt, a common practice seen in some hostless parking radar systems (in such case, when this sensor fails, the acoustic alarm function of the system fails).

Each sensor of the hostless parking radar system of the present invention can be connected with the buzzer 4 to drive it to carry out acoustic alarm prompt. When the original master probe that drives the buzzer 4 to acoustic alarm prompt in the system fails, the power-on system will automatically set another well-functioning probe as the master probe to carry out acoustic alarm prompt, wherein the self-check result output alarm and the normal object detection range information prompt alarm of the system can run normally. This characteristic reflects better functionality of the hostless parking radar system of the present invention, and more importantly, ensures functional completeness and reliability of the parking radar system. 4. Each sensor of the system can communicate with the vehicle bus module 3.

The hostless parking radar system that cannot communicate with the vehicle bus module 3 makes it difficult for the parking radar system to achieve a radar image display function via an automobile instrument or a vehicle multimedia display screen, and thus, the functionality of the system is not good enough.. For the hostless parking radar system in which only one sensor communicates with the vehicle bus module 3, the data transmission function of the system fails when this sensor fails, , leading to the failure of all or some functions of the system.

In the hostless parking radar system of the present invention, each sensor of the system is connected with the vehicle bus module 3 via the LIN bus, and when the master probe in charge of data transmission fails, the system will automatically set another well-functioning probe as the master probe to communicate with the vehicle bus module 3. This characteristic reflects better functionality of the hostless parking radar system of the present invention, and more importantly, ensures functional completeness and reliability of the parking radar system.

To sum up, the hostless parking radar system of the present invention realizes all functional characteristics of the traditional host-containing parking radar system, that is to say, the hostless parking radar system of the present invention overcomes various defects of all other existing hostless parking radar systems, makes the hostless radar system applied almost without any barrier, and realizes a great breakthrough technically.

In a most simple manner, the hostless parking radar system of the present invention is provided with a plurality of equivalent ultrasonic sensors and a buzzer alarm which is independent or integrated to other component, wherein the system is usually provided with four sensors. In specific applications, the hostless parking radar system of the present invention may also be provided with two or three or more than four sensors.

Meanwhile, in application, in addition to the setting of a group of hostless parking radars as reversing radars, shown in Fig. 8 (Figs. 9 and 10), two groups of hostless parking radars are also shown in Fig. 8 (Figs. 9 and 10) with one in the front and the other in the back of an automobile to serve as automobile front parking radar and automobile back parking radar. Moreover, if a pin is added to a single sensor, the LIN bus connection and communication manner among the sensors and between the sensors and the vehicle bus module 3 may be set as the CAN bus connection and communication manner; or two groups of LIN bus communication are set, one group being in charge of internal communication between the sensors of the system, and the other group being in charge of external communication between the system and the vehicle bus module 3.

## Claims

1. A hostless parking radar system, comprising a plurality of sensors, **characterized in that**,
each sensor unit can be independently used as a master sensor to coordinate other sensors as slave sensors, and controls the working time sequence of each slave sensor; and
each sensor unit is independent in connection with and in communication with a vehicle bus module and/or a buzzer.

2. The hostless parking radar system according to claim 1, **characterized in that**, the internal structure of each sensor is identical.

3. The hostless parking radar system according to claim 1, **characterized in that**, only one sensor is used as a master sensor at the same working time.

4. The hostless parking radar system according to claim 1, **characterized in that**, each sensor comprises a singlechip (11), an ultrasonic sensor (13), a transmitting module (14), a receiving module (15), a power module (16), a detection and control module I (17) and a detection and control module II (18); the singlechip (11) is a control core and generates ultrasonic pulses, and the ultrasonic pulses are amplified by the transmitting module (14) to drive the ultrasonic sensor (13) to transmit ultrasonic; the ultrasonic sensor (13) receives return signals, and the return signals are amplified and filtered by the receiving module (15) and then transmitted to the singlechip (11) for analyzing.

5. The hostless parking radar system according to claim 4, **characterized in that**, both the detection and control module I (17) and the detection and control module II (18) are connected with the singlechip (11), and the detection and control module I (17) or the detection and control module II (18) is in connection with and in communication with the buzzer (4).

6. The hostless parking radar system according to claim 4 or 5, **characterized in that**, the sensor further comprises a communication module (12), which is in connection with and in communication with the vehicle bus module (3).

7. The hostless parking radar system according to claim 6, **characterized in that**, the sensor is provided with a PIN1, a PIN2, a PIN3, a PIN4 and a PIN5 for external connection; and in the sensor, the PIN1 is connected with the detection and control module I (17), the PIN2 is connected with the detection and control module II (18), the PIN3 is connected with the communication module (12), the PIN4 is a ground end, and the PIN5 is connected with the power module (16).

8. The hostless parking radar system according to claim 7, **characterized in that**, the PIN1, the PIN2 and the PIN3 can function as input pins and output pins between corresponding connection units.

9. The hostless parking radar system according to claim 7, **characterized in that**, the PIN1 and the PIN2 are connected to a high-level power end, a low-level ground end or an overhead end, and the connection combination forms of the PIN1 and the PIN2 in each sensor are different, thus forming distinguishing features of input voltage signals between the PIN1 and the PIN2.

10. The hostless parking radar system according to claim 9, **characterized in that**, when the PIN1 and the PIN2 are used as input pins, the PIN1 and the PIN2 respectively receive external input high-level, low-level and overhead signals, and each sensor detects different input voltage signal features via the PIN1 and the PIN2 therein to realize the positioning and ID number allocating thereof.

11. The hostless parking radar system according to claim 7, **characterized in that**, the sensor is externally connected with a system communication line via the PIN3 to realize connection and communication with the vehicle bus module (3).

12. The hostless parking radar system according to claim 7, **characterized in that**, a high-level line I (5) and a high-level line II (6) are arranged in the system and are connected with an external power supply, the PIN5 of each sensor is connected with the high-level line 1(5), and the PIN1 and/or the PIN2 are connected with the high-level line II (6).

13. The hostless parking radar system according to claim 12, **characterized in that**, the high-level line II (6) functions as an input line and an output line.

14. The hostless parking radar system according to claim 12, **characterized in that**, the buzzer (4) is arranged on the high-level line II (6).

15. The hostless parking radar system according to claim 1, **characterized in that**, the buzzer (4) is arranged independently or integrated to other component.

16. A hostless parking radar control method for implementing the above system, **characterized in that**,
1) when the system is power-on, the positioning of each sensor and allocation of an ID number to each sensor are identified by detecting the distinguishing features of input voltage signals of each sensor;
2) the system sets a first normal sensor as a master sensor thereof, and the remaining sensors as slave sensors;
3) the master sensor instructs the slave sensors to carry out self-check, receives the self-check results, comprehensively judges the states of all the sensors, and then carries out corresponding self-check alarm prompt on the buzzer, or sends the self-check results to a vehicle bus module to carry out prompt; and
4) after the power-on self-check of the system is completed, the master sensor coordinates the sensors to work sequentially and carry out internal communication, thus realizing alarm output and external communication with the vehicle bus module.

17. The hostless parking radar control method according to claim 16, **characterized in that**, in steps 2) and 3), if the first sensor fails, and when the system is power-on, the second sensor that does not receive the self-check inquiry information of the first sensor within a set time serves as the master sensor.

18. The hostless parking radar control method according to claim 16, **characterized in that**, in step 3), the self-check method of each sensor is:
a) when all the sensors are normal, the buzzer buzzes to give an acoustic prompt;
b) when one or more sensors fail, the buzzer buzzes to give different acoustic prompts; and
c) when all the sensors fail, the buzzer does not buzz.
